# EUROPÄISCHE PATENTSCHRIFT

(11) **EP 3 953 986 B1**
(45) Veröffentlichungstag und Bekanntmachung des Hinweises auf die Patenterteilung: **06.05.2026**
(21) Anmeldenummer: 20714504.6
(22) Anmeldetag: 20.03.2020
(51) Int. Cl.: H01M 8/0254, H01M 8/0258, H01M 8/0267, H01M 8/248, F28F 3/04, H01M 8/1018, H01M 8/0206, H01M 8/0213, H01M 8/0228

(54) **BIPOLARPLATTE FÜR BRENNSTOFFZELLEN, BRENNSTOFFZELLENSTAPEL MIT SOLCHEN BIPOLARPLATTEN SOWIE FAHRZEUG MIT EINEM SOLCHEN BRENNSTOFFZELLENSTAPEL**
BIPOLAR PLATE FOR FUEL CELLS, FUEL CELL STACK WITH SUCH BIPOLAR PLATES AS WELL AS VEHICLE WITH SUCH A FUEL CELL STACK
PLAQUE BIPOLAIRE POUR PILES À COMBUSTIBLE, EMPILEMENT DE PILES À COMBUSTIBLE AVEC DE TELLES PLAQUES BIPOLAIRES AINSI QUE VÉHICULE AVEC UN TEL EMPILEMENT DE PILES À COMBUSTIBLE

(30) Priorität: 09.04.2019 DE 102019205069
(43) Veröffentlichungstag der Anmeldung: 16.02.2022
(73) Patentinhaber: Audi AG, 85045 Ingolstadt (DE)
(72) Erfinder: JILANI, Adel, Burnaby, British Columbia V5J 5J8 (CA); KUMAR, Sanjiv, Burnaby, British Columbia V5J 5J8 (CA); BRADEAN, Radu P., Burnaby, British Columbia V5J 5J8 (CA); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2020/057720
(87) Internationale Veröffentlichungsnummer: WO 2020/207754

(56) Entgegenhaltungen:
- WO-A2-2004/112178
- WO-A2-2010/054647
- DE-A1- 102004 016 494
- US-A1- 2005 106 444

## Beschreibung

Die Erfindung betrifft eine Bipolarplatte für eine Brennstoffzelle umfassend eine Anodenplatte mit einer Anodenseite und einer Kühlmittelseite, wobei auf der Anodenseite eine erste Strukturierung zur Ausbildung eines Anoden-Flussfelds ausgebildet ist; eine Kathodenplatte mit einer Kathodenseite und einer Kühlmittelseite, wobei auf der Kathodenseite eine zweite Strukturierung zur Ausbildung eines Kathoden-Flussfelds ausgebildet ist; wobei zwischen der Anodenplatte und der Kathodenplatte zur Ausbildung eines KühlmittelFlussfelds Strukturelemente angeordnet sind, die von den Kühlmittelseiten der Anodenplatte und der Kathodenplatte kontaktiert sind. Weiterhin betrifft die Erfindung einen Brennstoffzellenstapel mit solchen Bipolarplatten sowie ein Fahrzeug, das einen solchen Brennstoffzellenstapel aufweist.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für membrane electrode assembly), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (stack) angeordneter MEA gebildet, deren elektrische Spannungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (1/2 O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H²⁺ → H₂O).

Die Versorgung des Brennstoffzellenstapels mit seinen Betriebsmedien, also dem Anodenbetriebsgas (zum Beispiel Wasserstoff), dem Kathodenbetriebs gas (zum Beispiel Luft) und dem Kühlmittel, erfolgt über Hauptversorgungskanäle, die den Stapel in seiner gesamten Stapelrichtung durchsetzen und von denen die Betriebsmedien über die Bipolarplatten den Einzelzellen zugeführt werden. Für jedes Betriebsmedium sind mindestens zwei solcher Hauptversorgungskanäle vorhanden, nämlich einer zur Zuführung und einer zur Abführung des jeweiligen Betriebsmediums.

Typischerweise bestehen Bipolarplatten aus zwei miteinander verbundenen Halbplatten, die jeweils beidseitig strukturiert sind. Auf den voneinander abgewandten Seiten werden Strukturierungen zum Transport der Betriebsmedien und auf den zueinander zugewandten Seiten werden Strukturierungen zum Transport von Kühlmittel benötigt. Dabei müssen die Halbplatten jeweils aufeinander abgestimmt werden, da drei separate Transportwege mittels zweier Halbplatten zur Verfügung gestellt werden müssen. Das führt zu weiteren Randbedingungen, die die Flexibilität der Ausgestaltungen der Bipolar platten reduziert. In typischen Ausführungen sind die Halbplatten bekannter Bipolarplatten profiliert ausgebildet, wobei die Profile ineinander eingreifen beziehungsweise verschachtelt sind.

Der Brennstoffzellenstapel weist an seinen gegenüberliegenden Stapelenden typischerweise Endplatten auf, welche mittels Spannvorrichtungen als Teil eines Spannsystems miteinander verbunden sind. Mittels der Spannvorrichtungen werden Zugkräfte übertragen, welche die Endplatten zueinander ziehen und die dazwischen angeordneten Einzelzellen verpressen, also gegeneinanderpressen. Teil des Spannsystems sind zudem Druckfedern, um den Stapel gleichmäßig zu belasten und Schädigungen an diesem zu vermeiden.

Aus der DE 10 2004 016 494 A1 ist eine Brennstoffzellenanordnung mit gestapelten Brennstoffzellen bekannt, die elastische Strukturen innerhalb des Brennstoffzellenstapels aufweist.

Die WO 2004/112178 A2 offenbart eine elektrochemische Anordnung, bei der die elastische Verteilungsstruktur in einer Ebene geführt ist.

In der WO 2010/054647 A2 ist ein Brennstoffzellenmodul offenbart, das ohne Bipolarplatten in Betrieb genommen werden kann.

Die US 2005/0106444 A1 offenbart einen Brennstoffzellenstapel mit zwei gewellten Trennwänden zur Kühlung, die eine flächige und elastische Platte zwischen sich aufweisen.

Der Erfindung liegt die Aufgabe zugrunde, eine Bipolarplatte bereitzustellen, welche die Nachteile einer Bipolarplatte, die diese in Verbindung mit Druck federn aufweist, zumindest teilweise behebt.

Diese Aufgabe wird durch eine Bipolarplatte, einen Brennstoffzellenstapel sowie ein Fahrzeug mit einem solchen Brennstoffzellenstapel mit den Merkmalen der unabhängigen Ansprüche gelöst.

Die Bipolarplatte umfasst eine Anodenplatte mit einer Anodenseite und einer Kühlmittelseite, wobei auf einer Anodenseite eine erste Strukturierung zur Ausbildung eines Anoden-Flussfelds ausgebildet ist. Die Bipolarplatte um fasst ferner eine Kathodenplatte mit einer Kathodenseite und einer Kühlmittelseite, wobei auf der Kathodenseite eine zweite Strukturierung zur Ausbildung eines Kathoden-Flussfelds ausgebildet ist. Zwischen der Anodenplatte und der Kathodenplatte sind zur Ausbildung eines KühlmittelFlussfelds Strukturelemente angeordnet, die die Kühlmittelseiten der Anodenplatte und der Kathodenplatte kontaktieren. Erfindungsgemäß sind die Strukturelemente aus einem elastischen Material gefertigt.

Diese Strukturelemente dienen als eingebettete Federn in einem Brennstoffzellenstapel mit den erfindungsgemäßen Bipolarplatten unter Anderem zur Optimierung der Kompression bei gleichzeitiger Erhöhung einer strukturellen Robustheit.

Zudem kann dadurch die Stapelhöhe des Brennstoffzellenstapels im Vergleich zum Stand der Technik reduziert werden, da die üblicherweise verwendeten Druckfedern verzichtbar sind. Diese Druckfedern nach dem Stand der Technik bieten zudem keine gute Kontrolle des Anpressdrucks auf die aktive Fläche der Bipolarplatte, wobei es durch die daraus resultierende ungleichmäßige Stapelverdichtung zu Plattenbruch führen kann. Dies wird durch die erfindungsgemäße Bipolarplatte vermieden. Zudem kann durch den Verzicht auf Druckfedern Gewicht eingespart werden. Auch eine durch Biegung der Endplatte wird minimiert. Besonders vorteilhaft ist zudem, dass die Auswirkungen des Eindringens von GDL/MEA minimiert werden können.

Ferner kann eine Kostenreduzierung bei der Plattenherstellung realisiert werden, beispielsweise durch den Verzicht auf die Druckfedern und durch die Möglichkeit, das Form-In-Place (FIP)-Verfahren zur Großserienfertigung einzusetzen.

Die erfindungsgemäße Bipolarplatte, abgesehen von den Strukturelementen, besteht vorzugsweise aus einem leitfähigen Material, vorzugsweise aus einem kohlenstoffbasierten Material, besonders bevorzugt aus Graphit oder einem Kompositmaterial aus Graphit und Kohlenstoff. Auch der Einsatz von Metall ist vorgesehen.

Die erfindungsgemäß vorgesehenen Strukturelemente bestehen vorzugsweise aus einem elastischen leitfähigen Polymer, dass in dem Temperaturbereich des Brennstoffzellenbetriebs stabil ist, wobei vorzugsweise zumindest ein Strukturelement leitfähig ist. Vorzugsweise werden Silicone beziehungsweise Siloxane verwendet, wobei Polydimethylsiloxan besonders bevorzugt ist.

Das Polymer weist vorzugsweise eine elektrische Leitfähigkeit von > 100 S/cm auf. Ein elektrischer Widerstand liegt vorzugsweise bei 0,0008 W cm und das Kompressionsmodul vorzugsweise bei 5 MPa.

Die Strukturelemente sind zwischen Anodenplatte und Kathodenplatte von einander beabstandet angeordnet, so dass das Kühlmittel mit möglichst geringem Druckverlusten das Kühlmittel-Flussfeld der Bipolarplatte durchströmen kann.

Die Strukturelemente sind dazu säulenförmig ausgestaltet, vorzugsweise mit einem gleichbleibenden Querschnitt über die gesamte Länge des einzelnen Strukturelements oder auch mit einem über die Länge variierenden Quer schnitt, beispielsweise mit einem reduzierten Querschnitt in der Mitte der Strukturelemente.

Die Strukturelemente können unterschiedlich große Querschnittsflächen verteilt über die Fläche der Bipolarplatte aufweisen, um unterschiedlichen Anforderungen an die Federkraft in unterschiedlichen Bereichen der Bipolarplatte gerecht zu werden.

Vorzugsweise weisen die Strukturelemente einen rechteckigen oder quadratischen Querschnitt auf, so dass eine sehr einfache Fertigung möglich ist. Ferner sind auch runde oder ovale Querschnitte mit einer oder zwei Symmetrieachsen möglich.

Nach besonders bevorzugten Ausführungsformen der erfindungsgemäßen Bipolarplatte sind die Strukturierungen der Anodenplatte und der Kathoden platte derart ausgestaltet, dass zumindest die Kontaktfläche der Strukturelemente auf den jeweils anderen Seiten von Anodenplatte und Kathodenplatte von den Strukturierungen überdeckt wird, um den Druck über die gesamte Stapelhöhe zu verteilen. Somit werden die erste Strukturierung der Anodenseite und die zweite Strukturierung der Kathodenplatte sowie die Strukturelemente in Stapelrichtung der Bipolarplatten direkt übereinander angeordnet. Vorteilhafterweise können so Beschädigungen der Bipolarplatte vermieden werden.

Darüberhinausgehende räumliche Ausgestaltungen der Strukturierungen von Anodenplatte und Kathodenplatte sind zur Optimierung der Strömungsverhältnisse problemlos möglich. Bevorzugt ist eine äquivalente Ausgestaltung wie die der Strukturelemente vorgesehen.

Auch das Mischen von Strukturelementen mit unterschiedlichen Querschnitten ist erfindungsgemäß möglich.

Die Strukturelemente können unter Ausbildung von Strömungsbereichen regelmäßig oder unregelmäßig im Kühlmittelflussfeld angeordnet sein, um Druckverluste zu vermeiden und die notwendige Federkraft bedarfsorientiert einzusetzen. Bevorzugt bilden die Strukturelemente und optional die Strukturierungen bei regelmäßiger Anordnung ein Gittermuster aus.

Die Strukturelemente sind vorzugsweise mit zumindest der Anodenplatte oder der Kathodenplatte fixiert, beispielsweise durch Verkleben, wobei eine einseitige Fixierung die Montage der Bipolarplatten erleichtern kann und im allgemeinen ausreicht. Bevorzugt ist hierbei das Verkleben mit der das Oxidationsmittel führenden Kathodenplatte.

Erfindungsgemäß werden die Strukturelemente auf einer Trägerplatte angeordnet bereitgestellt. Diese Trägerplatte besteht vorzugsweise aus demselben Material wie die Strukturelemente und ist erfindungsgemäß einstückig mit den Strukturelementen hergestellt.

Die Trägerplatte kann entweder an der Anodenplatte oder an der Kathoden platte anliegend angeordnet sein. Diese vorteilhafte Ausgestaltung ermöglicht eine wesentlich vereinfachte Montage der erfindungsgemäßen Bipolar platte. Auch bei dieser Ausführungsform kann eine Verklebung mit zumindest der Anodenplatte und der Kathodenplatte analog zu den einzelnen Strukturelementen erfolgen.

Abgesehen von den vorab beschriebenen Vorgaben können die Flussfelder der Anodenplatte und der Kathodenplatte sowie das Kühlmittelflussfeld unabhängig voneinander individuell ausgestaltet werden.

Ein weiterer Aspekt der Erfindung betrifft einen Brennstoffzellenstapel, der einen Stapel zwischen zwei Endplatten abwechselnd angeordneter Membran-Elektroden-Anordnungen und erfindungsgemäßen Bipolarplatten um fasst.

Ferner betrifft die Erfindung ein Fahrzeug, das ein Brennstoffzellensystem mit einem erfindungsgemäßen Brennstoffzellenstapel aufweist. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie dient.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellenstapels;
- Figur 2: in perspektivischer Ansicht von oben ein Detail einer nicht von der Erfindung erfassten Bipolarplatte;
- Figur 3: in einer perspektivischen Ansicht von unten das Detail der Bipolarplatte nach Figur 2;
- Figur 4: in einer Schnittansicht das Detail der Bipolarplatte nach Figuren 2 und 3;
- Figur 5: in perspektivischer Ansicht ein Detail einer Kathodenplatte mit Strukturelementen;
- Figur 6: in einer Schnittansicht das Detail einer erfindungsgemäßen Bipolarplatte nach einer zweiten Ausführungsform;
- Figur 7: in perspektivischer Ansicht ein Detail einer Kathodenplatte mit auf einer Trägerplatte angeordneten Strukturelementen;
- Figur 8: in perspektivischer Ansicht ein Detail einer Kathodenplatte mit auf einer Trägerplatte angeordneten Strukturelementen nach einer zweiten Ausführungsform;
- Figur 9: in einer Aufsicht Strukturelemente mit ovalem Querschnitt auf einer Trägerplatte; und
- Figur 10: in einer Aufsicht Strukturelemente mit ovalem Querschnitt auf einer Trägerplatte nach einer zweiten Ausführungsform.

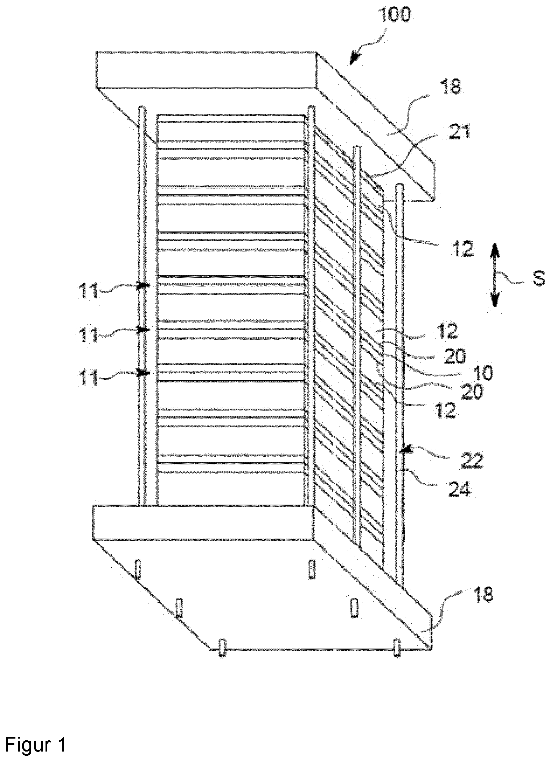

Figur 1 zeigt in einer schematischen Darstellung einen insgesamt mit 100 bezeichneten Brennstoffzellenstapel gemäß der vorliegenden Erfindung. Der Brennstoffzellenstapel 100 ist Teil eines nicht weiter dargestellten Fahrzeugs, insbesondere eines Elektrofahrzeugs, das einen Elektrotraktionsmotor aufweist, der durch den Brennstoffzellenstapel 100 mit elektrischer Energie versorgt wird. Der Brennstoffzellenstapel 100 umfasst eine Vielzahl von abwechselnd, an deren Flachseiten aneinandergereihten (gestapelten) Membran-Elektroden- Anordnungen 10 und Bipolarplatten 12. Insgesamt bilden also mehrere gestapelte Einzelzellen 11 den Brennstoffzellenstapel 100, wobei sowohl eine der Einzelzellen 11 , als auch der Brennstoffzellenstapel 100 allgemein als Brennstoffzelle bezeichnet werden können. Der Brennstoffzellenstapel 100 weist beidseitig Endplatten 18 auf. Zwischen den Bipolarplatten 12 und den jeweiligen Membran-Elektroden-Anordnungen 10 sind nicht dargestellte Anoden- und Kathodenräume angeordnet, welche von umlaufenden Dichtungen 20 begrenzt werden. Unter anderem, um die Dichtfunktion der Dichtungen 20 herzustellen, wird der Brennstoffzellenstapel 100 in der Stapelrichtung S mittels eines Spannsystems zusammengepresst (verpresst).

Das Spannsystem umfasst eine äußere Spannvorrichtung 22, sowie hier nicht sichtbare elastische Strukturelemente, die im Kühlmittelbereich der Bi polarplatten 12 angeordnet sind. Diese werden nachstehend noch näher beschrieben.

Zum Aufbau einer äußeren Spannung, welche auf die Strukturelemente im Brennstoffzellenstapel 100 übertragen wird, leiten längliche Zugkörper 24 der äußeren Spannvorrichtungen 22 Zugkräfte zwischen den beiden Endplatten 18 weiter, sodass die Endplatten 18 mittels der Zugkörper 24 zueinander gezogen werden. Dazu erstrecken sich die Zugkörper 24 in einer Stapelrichtung S des Brennstoffzellenstapels 100.

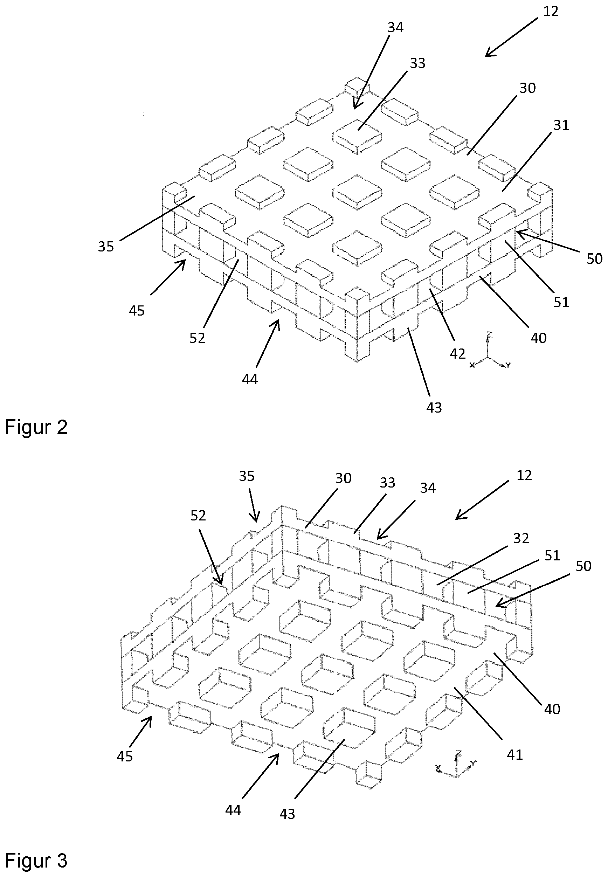

Figuren 2 bis 4 zeigen eine von der Erfindung nicht umfasste Bipolarplatte 12 in unterschiedlichen Ansichten. Dargestellt ist jeweils ein Detail der Bipolarplatte 12

Die Bipolarplatte 12 umfasst hierbei zwei Einzelplatten, eine Anodenplatte 30 sowie eine Kathodenplatte 40. Die Anodenplatte 30 weist eine Anodenseite 31 und eine Kühlmittelseite 32 auf, die zur Kathodenplatte 40 weist. Die Kathodenplatte 40 weist eine Kathodenseite 41 und eine zur Anodenplatte 30 weisende Kühlmittelseite 42 auf. Zur Ausbildung eines Kühlmittelflussfeldes 50 sind zwischen der Anodenplatte 30 und der Kathodenplatte 40, jeweils auf der Kühlmittelseite 32, 42, elastische Strukturelemente 51 angeordnet, die die Anodenplatte 30 und die Kathodenplatte 40 kontaktieren. Die Strukturelemente 51 sind säulenförmig und weisen einen quadratischen Querschnitt auf. Diese sind gleichmäßig verteilt und bilden somit Strömungspfade 52 in Form eines Gitternetzes aus, die von einem Kühlmittel in Längs- und Querrichtung bezogen auf eine Hauptachse der Bipolarplatte 12 durchströmt werden können.

Auf der vom Kühlmittelflussfeld 50 abgewandten Anodenseite 31 und Kathodenseite 41 sind eine erste Strukturierung 33 beziehungsweise eine zweite Strukturierung 43 vorgesehen, die beide analog zu den Strukturelementen 51 des Kühlmittelflussfeldes 50 ausgestaltet sind und ein Anodenflussfeld 34 und ein Kathodenflussfeld 44 ausbilden. D.h. diese sind säulenförmig mit einem quadratischen Querschnitt. Zudem bilden sie Strömungspfade 35, 45 für die beiden Reaktionsmedien aus, wobei diese in den Figuren 2 bis 4 in Stapelrichtung S mit den Strukturelementen 51 deckungsgleich sind.

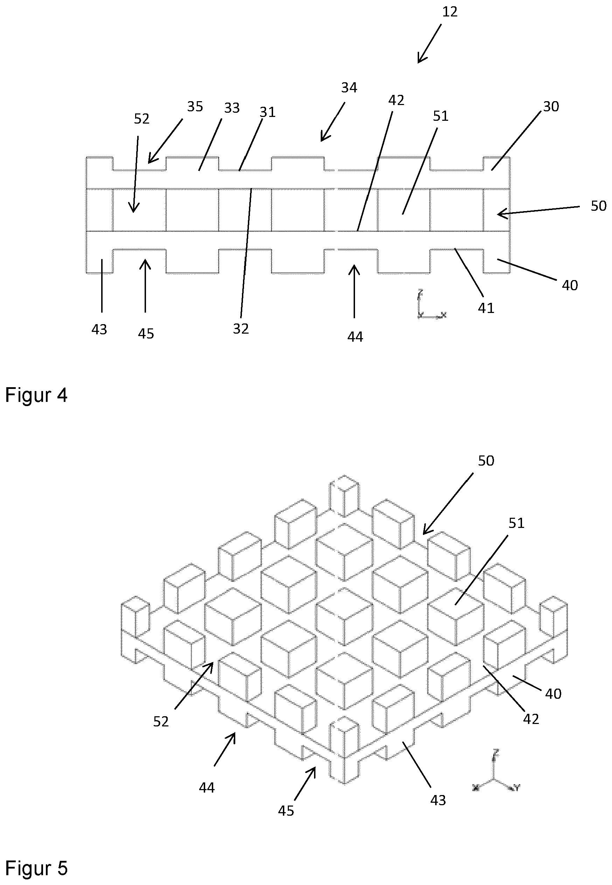

In Figur 5 wird ebenfalls ein Beispiel gemäß den Figuren 2 bis 4 gezeigt, jedoch mit dem Unterschied, dass die Anodenplatte 30 nicht dargestellt ist.

Die abweichenden Größen der Strukturelemente 51 im Zentrum der Kathodenplatte 40 im Gegensatz zu denen an den Rändern ist lediglich auf den gezeigten Ausschnitt zurückzuführen und hat keine technische Bedeutung, wobei es natürlich grundsätzlich möglich ist, die Strukturelemente 51 unterschiedlich zu dimensionieren und ungleichmäßig zu verteilen. Zur Vereinfachung der Montage der Bipolarplatte 12 werden die Strukturelemente 51 zumindest auf der Kühlmittelseite 42 der Kathodenplatte 40 fixiert beziehungsweise geklebt.

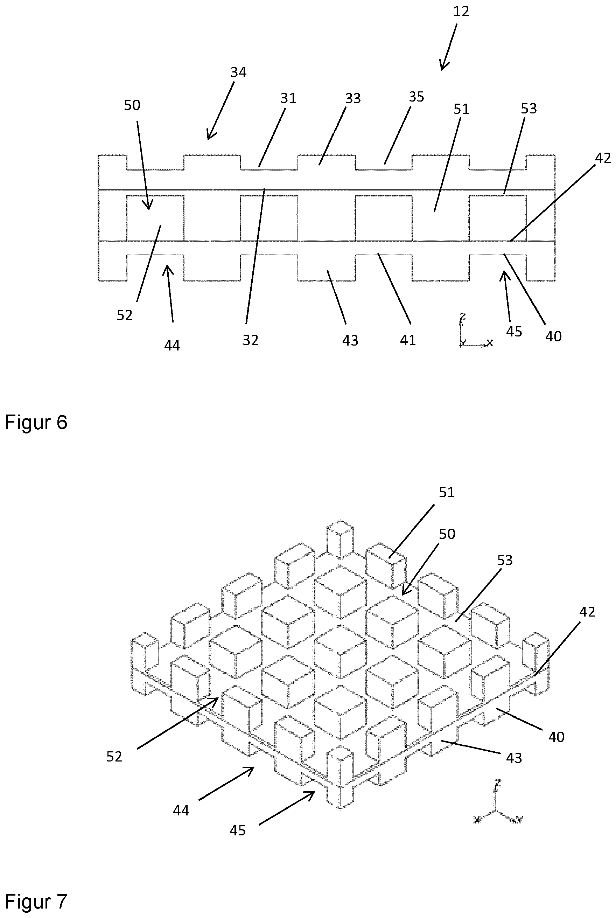

Figur 6 zeigt wiederum ein Detail einer erfindungsgemäßen Bipolarplatte 12 nach einer zweiten Ausführungsform im Schnitt. Bei dieser Ausführungsform sind die Strukturelemente 51 einstückig mit einer Trägerplatte 53 ausgebildet, die mit der flachen Seite auf der Kühlmittelseite 42 der Kathodenplatte 40 aufliegt. Die nicht dargestellte Anodenplatte 30 wird nach Anordnung der Trägerplatte 53 mit den Strukturelementen 51 auf der Kathodenplatte 40 aufgebracht, um die Bipolarplatte 12 zu komplettieren. Der Einsatz dieser Trägerplatte 53 erleichtert die Montage der Bipolarplatte 12 deutlich. Auch bei dieser Variante kann ein Verkleben der Trägerplatte 53 beziehungsweise der Strukturelemente 51 erfolgen.

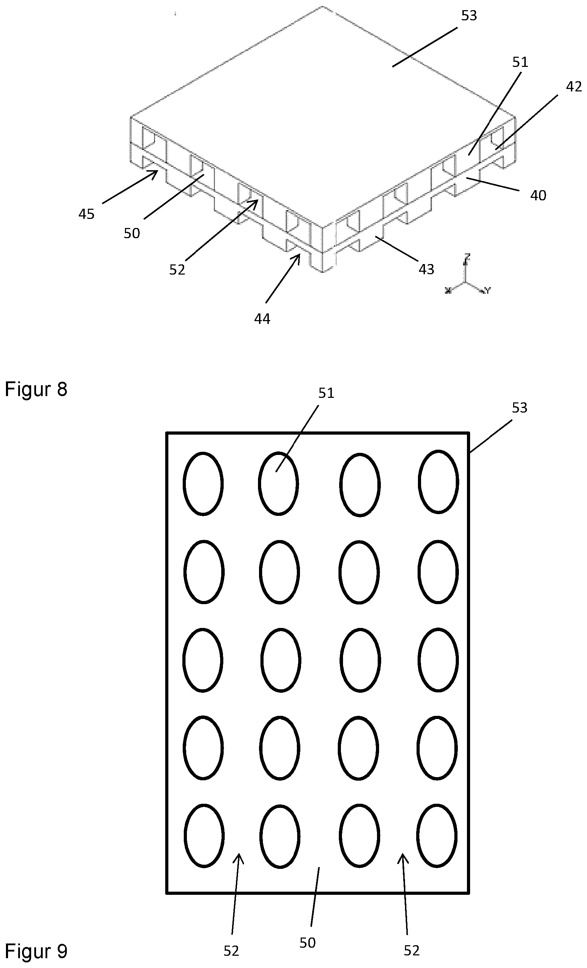

Die andere Variante, bei der die Seite der Trägerplatte 53, die die Strukturelemente 51 trägt, auf der Kühlmittelseite 42 der Kathodenplatte 40 aufliegt ist in Figur 8 gezeigt. Diese Variante entspricht ansonsten der in Figur 7 gezeigten.

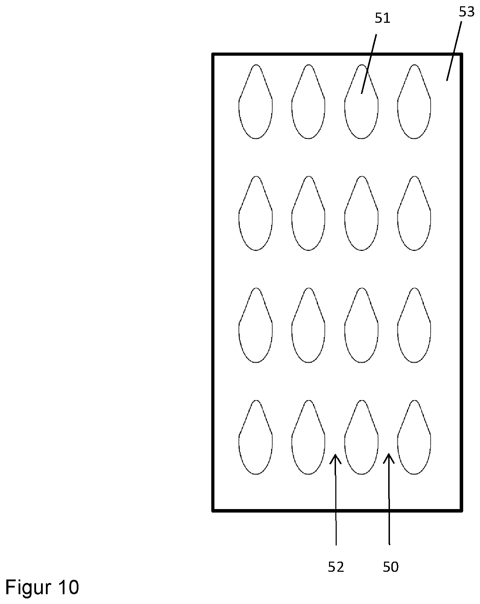

Die Figuren 9 und 10 zeigen jeweils eine Trägerplatte 53 mit darauf aufgebrachten Strukturelementen 51 , die einen ovalen Querschnitt mit zwei Symmetrieachsen (Figur 9) und einen ovalen Querschnitt mit einer Symmetrieachse (Figur 10) aufweisen. Diese Ausführungsformen dienen zur Optimierung der Strömungsverhältnisse eines Kühlmittels. Diese Querschnitte können auch als erste Strukturierung 33 und/oder zweite Strukturierung 43 gewählt werden. Sofern nicht explizit angegeben, betreffen die Ausführungen alle Ausführungsformen gleichermaßen.

### Bezugszeichenliste

100 Brennstoffzellenstapel
10 Membran-Elektroden-Anordnung
11 Einzelzelle
12 Bipolarplatte
18 Endplatte
20 Dichtung
21 Federsystem
22 Spannvorrichtung
24 länglicher Zugkörper
30 Anodenplatte
31 Anodenseite
32 Kühlmittelseite
33 erste Strukturierung
34 Anodenflussfeld
35 Strömungspfad
40 Kathodenplatte
41 Kathodenseite
42 Kühlmittelseite
43 zweite Strukturierung
44 Kathodenflussfeld
45 Strömungspfad
50 Kühlmittelflussfeld
51 Strukturelemente
52 Strömungspfad
53 Trägerplatte
S Stapelrichtung

## Patentansprüche

1. Bipolarplatte (12) für eine Brennstoffzelle umfassend: eine Anodenplatte (30) mit einer Anodenseite (31) und einer Kühlmittelseite (32), wobei auf der Anodenseite (31) eine erste Strukturierung (33) zur Ausbildung eines Anodenflussfelds (34) ausgebildet ist, und eine Kathodenplatte (40) mit einer Kathodenseite (41) und einer Kühlmittelseite (42), wobei auf der Kathodenseite (41) eine zweite Strukturierung (43) zur Ausbildung eines Kathodenflussfelds (44) ausgebildet ist; wobei zwischen der Anodenplatte (30) und der Kathodenplatte (40) zur Ausbildung eines Kühlmittelflussfelds (50) Strukturelemente (51 ) angeordnet sind, die von den Kühlmittelseiten (32, 42) der Anodenplatte (30) und der Kathodenplatte (40) kontaktiert sind, wobei die Strukturelemente (51) aus einem elastischen Material bestehen, **dadurch gekennzeichnet, dass** die Strukturelemente (51) auf einer Trägerplatte (53) ausgebildet sind, die entweder an der Anodenplatte (30) oder an der Kathodenplatte (40) anliegend angeordnet ist, wobei die Trägerplatte (53) mit der Anodenplatte (30) oder der Kathodenplatte (40) fixierbar oder fixiert ist, und dass die Trägerplatte (53) einstückig mit den Strukturelementen (51) hergestellt ist.

2. Bipolarplatte (12) nach Anspruch 1, **dadurch gekennzeichnet, dass** die Anodenplatte (30) und die Kathodenplatte (40) aus Metall oder einem leitfähigen kohlenstoffbasierten Material, vorzugsweise Graphit oder einem Kompositmaterial aus Graphit und Kohlenstoff bestehen.

3. Bipolarplatte (12) nach Anspruch 1 oder 2, **dadurch gekennzeichnet, dass** die Strukturelemente (51) aus einem elastischen Polymer bestehen, wobei zumindest ein Strukturelement leitfähig ist.

4. Bipolarplatte (12) nach einem der vorherigen Ansprüche, **dadurch gekennzeichnet, dass** die Strukturelemente (51) säulenförmig sind und vorzugsweise einen rechteckigen oder ovalen Querschnitt aufweisen und beabstandet voneinander angeordnet sind.

5. Bipolarplatte (12) nach einem der vorherigen Ansprüche, **dadurch gekennzeichnet, dass** die erste Strukturierung (33) der Anodenplatte (30) und die zweite Strukturierung (43) der Kathodenplatte (40) in Stapelrichtung (S) übereinander positioniert sind und sich zumindest teilweise mit der Querschnittsfläche der Strukturelemente (51) überschneiden.

6. Bipolarplatte (12) nach einem der vorigen Ansprüche, **dadurch gekennzeichnet, dass** die Strukturelemente (51) unter Ausbildung von Strömungspfaden (52) regelmäßig oder unregelmäßig angeordnet sind.

7. Bipolarplatte (12) nach einem der vorigen Ansprüche, **dadurch gekennzeichnet, dass** die Strukturierungen (33, 43) der Anodenplatte (30) und/oder der Kathodenplatte (40) säulenförmig ausgebildet sind.

8. Brennstoffzellenstapel (100), umfassend einen Stapel zwischen zwei Endplatten (18) abwechselnd angeordneter Membran-Elektroden-Anordnungen (10) und Bipolarplatten (12) nach einem der Ansprüche 1 bis 7.

9. Fahrzeug, aufweisend einen Brennstoffzellenstapel (100) nach Anspruch 8.

## Claims

1. Bipolar plate (12) for a fuel cell comprising: an anode plate (30) having an anode side (31) and a coolant side (32), wherein a first structuring (33) is formed at the anode side (31) in order to form an anode flux field (34), and a cathode plate (40) having a cathode side (41) and a coolant side (42), wherein a second structuring (43) is formed at the cathode side (41) in order to form a cathode flux field (44); wherein structural elements (51) which are contacted by the coolant sides (32, 42) of the anode plate (30) and the cathode plate (40) are arranged between the anode plate (30) and the cathode plate (40) in order to form a coolant flux field (50), wherein the structural elements (51) comprise a resilient material, **characterized in that** the structural elements (51) are formed on a carrier plate (53) which is arranged bearing either on the anode plate (30) or on the cathode plate (40), wherein the carrier plate (53) can be or is fixed to the anode plate (30) or the cathode plate (40), and **in that** the carrier plate (53) is produced integrally with the structural elements (51).

2. Bipolar plate (12) according to claim 1, **characterized in that** the anode plate (30) and the cathode plate (40) consist of metal or a conductive, carbon-based material, preferably graphite or a composite material comprising graphite and carbon.

3. Bipolar plate (12) according to claim 1 or 2, **characterized in that** the structural elements (51) consist of a resilient polymer, wherein at least one structural element is conductive.

4. Bipolar plate (12) according to any one of the preceding claims, **characterized in that** the structural elements (51) are column-like and
preferably have a rectangular or oval cross-section and are arranged with spacing from each other.

5. Bipolar plate (12) according to any one of the preceding claims, **characterized in that** the first structuring (33) of the anode plate (30) and the second structuring (43) of the cathode plate (40) are positioned one above the other in the stacking direction (S) and overlap each other at least partially with the cross-sectional surface-area of the structural elements (51).

6. Bipolar plate (12) according to any one of the preceding claims, **characterized in that** the structural elements (51) are arranged in a regular or irregular manner with flow paths (52) being formed.

7. Bipolar plate (12) according to any one of the preceding claims, **characterized in that** the structurings (33, 43) of the anode plate (30) and/or the cathode plate (40) are arranged in a column-like manner.

8. Fuel cell stack (100) comprising a stack between two end plates (18) of alternately arranged membrane/electrode arrangements (10) and bipolar plates (12) according to any one of claims 1 to 7.

9. Vehicle having a fuel cell stack (100) according to claim 8.

## Revendications

1. Plaque bipolaire (12) pour une pile à combustible comprenant : une plaque d'anode (30) avec un côté d'anode (31) et un côté de liquide de refroidissement (32), dans laquelle une première structuration (33) est configurée sur le côté d'anode (31) pour la configuration d'un champ de flux d'anode (34), et une plaque de cathode (40) avec un côté de cathode (41) et un côté de liquide de refroidissement (42), dans laquelle une seconde structuration (43) est configurée sur le côté de cathode (41) pour la configuration d'un champ de flux de cathode (44) ; dans laquelle des éléments structurels (51) sont agencés entre la plaque d'anode (30) et la plaque de cathode (40) pour la configuration d'un champ de flux de liquide de refroidissement (50) qui sont au contact des côtés de liquide de refroidissement (32, 42) de la plaque d'anode (30) et de la plaque de cathode (40), dans laquelle les éléments structurels (51) se composent d'un matériau élastique, **caractérisée en ce que** les éléments structurels (51) sont configurés sur une plaque de support (53) qui est agencée soit reposant sur la plaque d'anode (30) soit sur la plaque de cathode (40), dans laquelle la plaque de support (53) est ou peut être fixée à la plaque d'anode (30) ou à la plaque de cathode (40), et **en ce que** la plaque de support (53) est fabriquée d'un seul tenant avec les éléments structurels (51).

2. Plaque bipolaire (12) selon la revendication 1, **caractérisée en ce que** la plaque d'anode (30) et la plaque de cathode (40) se composent de métal ou d'un matériau conducteur à base de carbone, de préférence de graphite ou d'un matériau composite de graphite et de carbone.

3. Plaque bipolaire (12) selon la revendication 1 ou 2, **caractérisée en ce que** les éléments structurels (51) se composent d'un polymère élastique, dans laquelle au moins un élément structurel est conducteur.

4. Plaque bipolaire (12) selon l'une quelconque des revendications précédentes, **caractérisée en ce que** les éléments structurels (51) sont en forme de colonne et présentent de préférence une section transversale rectangulaire ou ovale et sont agencés à distance l'un de l'autre.

5. Plaque bipolaire (12) selon l'une quelconque des revendications précédentes, **caractérisée en ce que** la première structuration (33) de la plaque d'anode (30) et la seconde structuration (43) de la plaque de cathode (40) sont positionnées l'une sur l'autre dans le sens d'empilement (S) et se chevauchent au moins partiellement avec l'aire de section des éléments structurels (51).

6. Plaque bipolaire (12) selon l'une quelconque des revendications précédentes, **caractérisée en ce que** les éléments structurels (51) sont agencés régulièrement ou irrégulièrement en configurant des chemins d'écoulement (52).

7. Plaque bipolaire (12) selon l'une quelconque des revendications précédentes, **caractérisée en ce que** les structurations (33, 43) de la plaque d'anode (30) et/ou de la plaque de cathode (40) sont configurées en forme de colonne.

8. Empilement de piles à combustible (100) comprenant un empilement entre deux plaques terminales (18) d'ensembles membrane/électrode (10) et de plaques bipolaires (12) agencés en alternance selon l'une quelconque des revendications 1 à 7.

9. Véhicule présentant un empilement de piles à combustible (100) selon la revendication 8.
